# EUROPÄISCHE PATENTSCHRIFT

(11) **EP 3 911 553 B1**
(45) Veröffentlichungstag und Bekanntmachung des Hinweises auf die Patenterteilung: **13.03.2024**
(21) Anmeldenummer: 20700694.1
(22) Anmeldetag: 13.01.2020
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 16.01.2019 DE 102019200488
(43) Veröffentlichungstag der Anmeldung: 24.11.2021
(73) Patentinhaber: thyssenkrupp Presta AG, 9492 Eschen (LI); thyssenkrupp AG, 45143 Essen (DE)
(72) Erfinder: GEIGER, Adrian Vincent, 9436 Balgach (CH); MACHINEK, Manoel, 9436 Balgach (CH); NAGY, Balint Kalman, 9462 Montlingen (CH)
(74) Vertreter: thyssenkrupp Intellectual Property GmbH
(86) Internationale Anmeldenummer: PCT/EP2020/050634
(87) Internationale Veröffentlichungsnummer: WO 2020/148198

(56) Entgegenhaltungen:
- DE-A1-102018 201 029
- DE-A1-102018 201 196
- DE-B3-102014 110 204
- US-A1- 2014 000 405

## Beschreibung

### Stand der Technik

Die Erfindung betrifft eine Lenksäule für ein Kraftfahrzeug, umfassend eine mit der Karosserie eines Kraftfahrzeugs verbindbare Trageinheit, eine an der Trageinheit lösbar festspannbare Stelleinheit, in der eine Lenkspindel um ihre Längsachse drehbar gelagert ist, und eine Spanneinrichtung, die in eine Fixierstellung bringbar ist, in der sie die Stelleinheit relativ zur Trageinheit festlegt, und in eine Freigabestellung, in der sie eine Verstellung der Stelleinheit relativ zur Trageinheit zumindest in einer Höhenrichtung quer zur Längsachse freigibt, und die einen längs einer Spannachse angeordneten Spannbolzen aufweist, der quer zur Längsachse durch ein in einer Verstellrichtung langgestrecktes Langloch in der Trageinheit hindurchgeführt ist, in dem er in Freigabestellung in Verstellrichtung bewegbar ist, und der mit einem Spanngetriebe zusammenwirkt, wobei auf dem Spannbolzen ein Fixierelement angeordnet ist, welches von der Spanneinrichtung in Richtung der Spannachse gegen die Trageinheit verspannbar ist, und eine Führungseinrichtung ausgebildet ist mit korrespondierenden Führungselementen an dem Fixierelement und an der Trageinheit, in denen das Fixierelement relativ zur Trageinheit translatorisch geführt ist, wobei die Führungselemente mit Abstand zum Langloch angeordnet sind, und wobei das Fixierelement mindestens einen seitlich abstehenden Ausleger aufweist, an dem mindestens ein Führungselement angebracht ist.

Zur Anpassung der Lenkradposition an die Sitzposition des Fahrers eines Kraftfahrzeugs sind verstellbare Lenksäulen bekannt. Eine Höhenverstellung des am hinteren Ende der Lenkspindel angebrachten Lenkrads kann durch die Einstellung der Neigung der Lenksäule vorgenommen werden, zur Einstellung des Abstands kann eine teleskopartige Längsverstellung in Richtung der Lenksäulen-Längsachse relativ zur Fahrzeugkarosserie erfolgen.

An der Fahrzeugkarosserie ist die Trageinheit der Lenksäule, auch als Konsole bezeichnet, fest angebracht. Die Lenkspindel ist in der Stelleinheit in einem Mantelrohr um ihre Längsachse drehbar gelagert. Die Verstellbarkeit wird durch eine Spanneinrichtung realisiert, die wahlweise in eine Fixierstellung oder eine Freigabestellung gebracht werden kann, beispielsweise durch manuelle oder motorische Betätigung eines Spannelements zum Spannen oder Lösen. In der Fixierstellung ist die Stelleinheit in der eingestellten Betriebsposition kraftund/oder formschlüssig lösbar mit der Trageinheit verspannt. Zum Verstellen wird die Spanneinrichtung in Freigabestellung gebracht, wobei die Verspannung gelöst wird und die Lenksäule relativ zur Trageinheit bewegt und eine gewünschte Betriebsposition eingestellt werden kann.

In der gattungsgemäßen Bauform umfasst die Spanneinrichtung ein Spanngetriebe, welches ein Hubgetriebe aufweist, bei dem ein um eine Spannachse drehbarer Spannbolzen als Spannelement dient. Das Spanngetriebe kann in an sich bekannter Weise als Keilscheiben-, Nocken- oder Kippstiftgetriebe ausgeführt sein, welches eine Drehung des Spannbolzens in einen Klemmhub umsetzt. Der Klemmhub wird in Richtung der Spannachse quer zur Längsachse ausgeübt, so dass die Stelleinheit zur Fixierung mit der Klemmkraft längsseitig gegen die Trageinheit angepresst werden kann. Aus der DE 10 2011 000 319 B3 ist es beispielsweise bekannt, zwei in Höhen- und Längsrichtung erstreckte Seitenwangen der Trageinheit mittels der Spanneinrichtung gegeneinander zusammenzudrücken, so dass die dazwischen angeordnete Stelleinheit zwischen den Seitenwangen festgeklemmt wird.

Zur Realisierung der Höhenverstellung weist die Trageinheit ein Langloch auf, welches in der Höhen-Verstellrichtung schlitzförmig langgestreckt ist. Der Spannbolzen ist an der Stelleinheit drehbar gelagert und durch das Langloch hindurchgeführt. In der Freigabestellung kann die Stelleinheit in ihrer Verstellrichtung samt Spannbolzen und Spanngetriebe relativ zur Trageinheit in Höhenrichtung auf oder ab bewegt werden, wobei der Spannbolzen in dem Langloch entlang bewegt wird.

Um ein Aufstellen der Lenksäule im Crashfall wirksam zu verhindern, ist eine besonders belastbare Fixierung der Stelleinheit in Höhenrichtung mittels eines Fixierelements bekannt, welches im Wesentlichen scheibenförmig ist und eine Öffnung hat, durch die der Spannbolzen hindurchgeht. Das Fixierelement ist in Richtung der Spannachse wirkungsmäßig zwischen dem Spanngetriebe und der Trageinheit angeordnet, und wird bei der Höhenverstellung zusammen mit dem Spannbolzen bewegt. In Fixierstellung gebracht, wird das Fixierelement von der Spanneinrichtung gegen die Trageinheit angepresst. Um eine besonders belastbare Verbindung zu erzeugen, können bevorzugt an dem Fixierelement und der Trageinheit miteinander korrespondierende Verbindungsmittel ausgebildet sein, beispielsweise Kraftschlusselemente, bevorzugt auch Formschlusselemente in Form von in der Fixierstellung ineinander eingreifenden Verzahnungen. In der Freigabestellung sind diese Verbindungsmittel voneinander gelöst.

Um sicherzustellen, dass das Fixierelement und die Trageinheit in vorbestimmter Position, bevorzugt die Verbindungsmittel beim Fixieren in der optimalen Eingriffsposition zueinander stehen, wird in der DE 10 2011 000 319 B3 eine Führungseinrichtung in Form einer Verdrehsicherung beschrieben, um das Fixierelement in einer definierten Drehorientierung bezüglich der Spannachse relativ zum Tragelement zu halten, d.h. ein Mitdrehen mit dem Spannbolzen beim Lösen oder Spannen zu verhindern. Die Führungseinrichtung weist miteinander korrespondierende Führungselemente an dem Fixierelement und an der Trageinheit auf, in denen in Freigabestellung der Spanneinrichtung das Fixierelement relativ zur Trageinheit translatorisch entlang der Verstellrichtung geführt ist. An dem Fixierelement ist als Führungselement ein Vorsprung ausgebildet, der in das Langloch eingreift, welches das korrespondierende Führungselement an der Trageinheit bildet. Der Vorsprung kann zusammen mit dem Spannbolzen in dem Langloch entlang bewegt werden. Um eine wirksame Verdrehsicherung zu realisieren, muss mindestens ein Führungselement mit Abstand zur Spannachse in dem Langloch angeordnet sein. Dadurch muss das Langloch über den geforderten Verstellweg der Höhenverstellung hinaus zusätzlich verlängert werden, um das Führungselement aufnehmen zu können. Nachteilig daran ist, dass eine Vergrößerung des Langlochs zusätzlichen Bauraum erfordert, der häufig nicht zur Verfügung steht.

Aus der DE 102014 110204 B3, der DE 10 2018 201196 A1, der DE 10 2018 201029 A1 oder der US 2014/000405 A1 ist eine Lenksäule der eingangs genannten Art bekannt.

Angesichts der vorangehend erläuterten Problematik ist es eine Aufgabe der vorliegenden Erfindung, eine Lenksäule mit einer bauraumoptimierten, kompakter aufgebauten Führungseinrichtung zur Verfügung zu stellen.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine mit der Karosserie eines Kraftfahrzeugs verbindbare Trageinheit, eine an der Trageinheit lösbar festspannbare Stelleinheit, in der eine Lenkspindel um ihre Längsachse drehbar gelagert ist, und eine Spanneinrichtung, die in eine Fixierstellung bringbar ist, in der sie die Stelleinheit relativ zur Trageinheit festlegt, und in eine Freigabestellung, in der sie eine Verstellung der Stelleinheit relativ zur Trageinheit zumindest in einer Höhenrichtung quer zur Längsachse freigibt, und die einen längs einer Spannachse angeordneten Spannbolzen aufweist, der quer zur Längsachse durch ein in einer Verstellrichtung langgestrecktes Langloch in der Trageinheit hindurchgeführt ist, in dem er in Freigabestellung in Verstellrichtung bewegbar ist, und der mit einem Spanngetriebe zusammenwirkt, wobei auf dem Spannbolzen ein Fixierelement angeordnet ist, welches von der Spanneinrichtung in Richtung der Spannachse gegen die Trageinheit verspannbar ist, und eine Führungseinrichtung ausgebildet ist mit korrespondierenden Führungselementen an dem Fixierelement und an der Trageinheit, in denen das Fixierelement relativ zur Trageinheit translatorisch geführt ist, wobei die Führungselemente mit Abstand zum Langloch angeordnet sind, und wobei das Fixierelement mindestens einen seitlich abstehenden Ausleger aufweist, an dem mindestens ein Führungselement angebracht ist, ist erfindungsgemäß vorgesehen, dass mindestens ein Ausleger ein Federelement aufweist.

Das Fixierelement weist mindestens einen seitlich abstehenden Ausleger auf, an dem mindestens ein Führungselement angebracht oder angeordnet ist. Der mindestens eine Ausleger kann als Arm oder Träger ausgebildet sein, der sich an dem Fixierelement von der Spannachse aus gesehen nach außen absteht. Durch die Dimensionierung des Auslegers kann die Länge der wirksamen Drehmomentabstützung vorgegeben werden, und es besteht eine vergrößerte konstruktive Freiheit bei der Positionierung der korrespondierenden Führungselemente an der Trageinheit.

Erfindungsgemäß ist vorgesehen, dass das mindestens ein Führungselement am freien Ende des Auslegers angebracht oder angeordnet ist.

Eine vorteilhafte Weiterbildung sieht vor, dass mindestens ein Ausleger ein Federelement aufweist. Das Führungselement kann sich dabei über das Federelement an einem Ausleger abstützen. Besonders vorteilhaft ist es, dass der Ausleger selbst zumindest über einen Teil seiner Länge biegeelastisch als Federzunge ausgebildet ist. Der Ausleger steht quer zur Spannachse seitlich von dem Fixierelement ab, beispielsweise zumindest teilweise quer zur Verstellrichtung. An seinem freien, von dem Fixierelement angewandten Endbereich ist das Führungselement angebracht, und durch den biegeelastischen Ausleger entgegen der Richtung der Spannachse am Fixierelement gehalten und federnd abgestützt. Dabei ist der Ausleger so geformt und dimensioniert, dass er die korrespondierenden Führungselemente sowohl in Fixierstellung als auch in Freigabestellung unter Federspannung im Führungseingriff hält.

Einer oder mehrere derartige Ausleger können einfach als Federzungen oder Blattfedern ausgebildet sein, bei denen das Federelement in den Ausleger integriert ist, bevorzugt einstückig. Besonders vorteilhaft ist es, dass ein oder mehrere, bevorzugt sämtliche Ausleger einstückig mit dem Fixierelement ausgebildet sind. Beispielsweise kann das Fixierelement als einschließlich der Ausleger als einstückiges Blechformteil gefertigt werden, bevorzugt aus Stahl- oder Federstahlblech. Die Federcharakteristik der Ausleger kann dann mit geringem Aufwand durch die Länge, die Form, das Material und den Querschnitt der Ausleger vorgegeben und hinsichtlich der funktionalen Vorgaben optimiert werden.

Dadurch, dass das Fixierelement und/oder das Tragelement zumindest teilweise ein Blechformteil umfassen, können die Führungselemente, und/oder Federelemente und/oder Verbindungsmittel mit geringem fertigungstechnischem Aufwand realisiert werden. Besonders vorteilhaft und rationell ist eine einstückige Ausbildung als Blechformteil, bevorzugt aus Stahloder Federstahlblech. Durch Umformoperationen kann an einem einstückigen Fixierelement Führungselemente beispielsweise durch sickenförmige Ein- oder Ausformungen gebildet sein, und Verbindungsmittel beispielsweise als gestanzte oder eingepresste Verzahnungen, und Ausleger als federnde, streifenförmige Arme, an denen Führungselemente angeformt sind.

Die Führungselemente sind außerhalb des Langlochs realisiert. Entsprechend wird die Dimensionierung des Langlochs allein durch den Verstellweg und den Durchmesser des Spannbolzens bestimmt. Dadurch kann das Langloch bei gleichem Verstellweg kürzer gestaltet werden als im Stand der Technik, bei dem zusätzliche Führungsmittel in dem Langloch angeordnet sind. Vorteilhaft ist, dass das für die rotatorische Fixierung maßgebliche Stützmoment bezüglich der Spannachse einfach dadurch erhöht werden kann, dass der radiale Abstand der Führungselemente zur Spannachse, oder zueinander vergrößert wird, wobei in vorteilhafter Weise und im Gegensatz zum Stand der Technik eine Verlängerung des Langlochs nicht erforderlich ist.

Bevorzugt ist der radiale Abstand der Führungselemente zum Langloch größer 0mm, besonders bevorzugt größer gleich 0,2mm und besonders bevorzugt größer gleich 2mm.

Um eine bauraumsparende Ausführung zu gewährleisten, ist der Abstand bevorzugt kleiner 50mm.

Bevorzugt ist die Stelleinheit in Freigabestellung um eine Schwenkachse relativ zur Trageinheit verschwenkbar zur Bereitstellung der Höhenverstellung.

Bevorzugt ist ein an dem Fixierelement ausgebildetes Verbindungsmittel in Fixierstellung mit der Trageinheit verbindbar zur Bildung einer in Verstellrichtung wirksamen Verbindung.

Dadurch kann die Fixierung der Stelleinheit in der Trageinheit weiter verbessert werden, beispielsweise durch Kraft- und/oder Formschlusselemente des Verbindungsmittels.

In der Freigabestellung der Spanneinrichtung ist das Fixierelement relativ zur Trageinheit durch die Führungselemente entlang der Verstellrichtung translatorisch zwangsgeführt, so dass eine Verdrehung um die Spannachse relativ zur Trageinheit verhindert oder zumindest stark begrenzt wird. Dadurch kann insbesondere sichergestellt werden, dass an dem Fixierelement und der Trageinheit ausgebildete Verbindungsmittel, insbesondere Formschlusselemente wie Verzahnungen oder dergleichen, nicht unkontrolliert um die Spannachse gegeneinander verdreht werden können, und dadurch beim Fixieren der Spanneinrichtung jederzeit optimal miteinander verbunden werden.

Die Verbindungsmittel umfassen bevorzugt miteinander korrespondierende Formschlusselemente an dem Fixierelement und der Trageinheit. Die Formschlusselemente können beispielsweise Verzahnungen umfassen, die auf den in Richtung der Spannachse einander gegenüberliegenden, gegeneinander gerichteten, im Wesentlichen senkrecht zur Spannachse stehenden Seiten ausgebildet sein können, oder alternativ oder zusätzlich an Randflächen des Fixierelements, die zumindest teilweise im Wesentlichen parallel zur Spannachse liegen. Die Verzahnungen weisen bevorzugt Zähne auf, die quer zur Höhenrichtung verlaufen, so dass beim Eingriff ein in Höhenrichtung, also der durch das Langloch vorgegebenen Höhen-Verstellrichtung, wirksamer Formschluss erzeugt wird. Die Formschlusselemente werden in jedem Fall sicher miteinander verbunden, wenn die Spannachse betätigt wird und das Fixierelement mit der Trageinheit, und die Trageinheit mit der Stelleinheit durch den Klemmhub des Spanngetriebes gegeneinander bewegt und miteinander verbunden werden.

Alternativ oder zusätzlich können die Verbindungsmittel Kraftschlusselemente umfassen. Kraftschlusselemente weisen zumindest eine Reibfläche auf.

Vorzugsweise können die Führungselemente entlang zumindest eines Längsrandes des Langlochs außerhalb des Öffnungsquerschnitts angeordnet sein, beispielsweise parallel zur Längserstreckung des Langlochs. Es kann vorteilhaft im Hinblick auf eine sichere rotatorische Fixierung bezüglich der Trageinheit sein, dass Führungselemente auf beiden Längsseiten des Langlochs angeordnet sind.

Die Führungselemente können an den Längsrändern des Langlochs parallel verlaufen. Es ist dabei möglich, dass die Führungselemente Abstand zu den Längsrändern quer zur Längserstreckung des Langlochs haben. Durch einen vergrößerten Abstand zum Längsrand wird auch der Abstand der Führungselemente zur Spannachse vergrößert, so dass ein erhöhtes Stützmoment für eine belastbare rotatorische Fixierung erzeugt werden kann.

Bevorzugt können Führungselemente beiderseits des Langlochs angeordnet sein. Auf diese Weise kann mit geringen Aufwand bei kompakter Bauweise ein hohes Stützmoment der Verdrehsicherung realisiert werden.

Die durch die Führungselemente gebildete Führungseinrichtung führt das Fixierelement bevorzugt dem Verlauf des Langlochs folgend. Falls das Langloch beispielsweise bogenförmig ausgebildet ist, können sich die Führungselemente parallel dazu bevorzugt ebenfalls bogenförmig erstrecken.

Das Langloch und das zumindest eine Führungselement können bogenförmig ausgebildet sein. Besonders bevorzugt ist die bogenförmige Ausbildung des Langlochs und des zumindest einen Führungselements durch einen Radius definiert, wobei der Radienmittelpunkt mit der Schwenkachse zusammenfällt.

Eine vorteilhafte Ausführung der Erfindung sieht vor, dass miteinander korrespondierende Führungselemente auf den in Richtung der Spannachse einander gegenüberliegenden Stirnseiten von Fixierelement und Tragelement angeordnet sind. Die Stirnseiten haben funktionsbedingt eine Ausdehnung in Längs- und Höhenrichtung, wobei sie sich zumindest abschnittweise überlappend im Bereich der Längsränder des Langlochs erstrecken. Dadurch kann zusätzlich eine erfindungsgemäße translatorische Führung innerhalb der Fläche des Fixierelements parallel zur Längs- und Höhenrichtung ausgebildet sein. Insbesondere sind keine außerhalb der Flächenerstreckung des Fixierelements in Längs- und Höhenrichtung liegenden Führungsmittel an dem Tragelement erforderlich, was für eine kompakte Bauweise vorteilhaft ist.

Es ist möglich, dass die Führungselemente mindestens eine Schiene und ein daran entlang bewegbares Gleitstück umfassen. Unter einer Schiene wird ein langgestrecktes Profil verstanden, welches zumindest einen sich längs in Verstellrichtung erstreckenden Steg oder Vorsprung, oder eine Nut oder Durchbrechung aufweist. Eine Schiene ist auf einer oder bevorzugt auf beiden Seiten des Langlochs in Richtung dessen Längserstreckung, bevorzugt parallel zum Längsrand angeordnet. Das Gleitstück hat einen mit der Schiene korrespondierenden freien Querschnitt, beispielsweise eine Nut oder einen Vorsprung, der mit der Schiene derart in Eingriff gebracht werden kann, dass das Gleitstück in Längsrichtung der Schiene geführt entlang bewegt werden kann. Dabei ist das Gleitstück bevorzugt in Längsrichtung kürzer als die Schiene. Bevorzugt bilden Schiene und Gleitstück einen Formschluss quer zur Längsrichtung. Derartige Schienen und Gleitstücke können konstruktiv einfach an die im Betrieb zu erwartenden Belastungen und den zur Verfügung stehenden Bauraum angepasst werden, und können mit geringem Fertigungsaufwand realisiert werden.

Bevorzugt kann die Schiene bogenförmig ausgebildet sein, wobei bevorzugt der Radienmittelpunkt mit der Schwenkachse zusammenfällt.

Bevorzugt können mindestens eine Schiene an der Trageinheit, und mindestens ein Gleitstück an dem Fixierelement ausgebildet sei, oder umgekehrt. Es ist auch möglich, jeweils mindestens ein Gleitstück und mindestens eine Schiene jeweils an Trageinheit und Fixierelement anzuordnen.

Es können auch unterschiedlich ausgebildete Paarungen von Schiene und Gleitstück vorgesehen sein, so dass bei der Montage ausschließlich füreinander bestimmte Schienen und Gleitstücke zusammengesetzt werden können. Dadurch wird eine Fehlorientierung beim Einbau verhindert und die Montage vereinfacht.

Es kann vorgesehen sein, dass ein Führungselement einstückig mit dem Fixierelement und/oder dem Tragelement ausgebildet ist. Durch die Integration der Führungselemente, die beispielsweise als eingeformte Nuten oder angeformte Stege ausgestaltet sein können, fallen keine zusätzlichen Bauteile an, wodurch die Fertigung vereinfacht und die Funktionssicherheit erhöht wird. Mittels einschlägiger Fertigungsverfahren können an dem Fixierelement und an dem Tragelement zumindest im Bereich des Langlochs Führungselemente praktisch ohne merklichen Zusatzaufwand einstückig angeformt werden, beispielsweise durch Umformoperationen wie Biegen, Stanzen, Pressen und dergleichen, oder durch formgebende Fertigung mittels Spritzgießen, Sintern oder dergleichen.

In diesem Zusammenhang ist die Fertigung des Fixierelements und der Trageinheit als Blechformteile mittels Pressen, Stanzen, Biegen, Tiefziehen und dergleichen, bevorzugt aus Stahlblech, besonders vorteilhaft.

Es kann aber auch vorgesehen sein, dass die Trageinheit als Gussbauteil ausgebildet ist, bevorzugt aus einer Aluminiumlegierung oder einer Magnesiumlegierung.

Eine vorteilhafte Ausführung ist, dass ein Führungselement an dem Fixierelement und/oder der Trageinheit federnd gelagert ist. Mittels eines Federelements, welches zwischen einem Führungselement und dem Fixierelement oder der Trageinheit angeordnet ist, ist das Führungselement dabei in Richtung der Spannachse federelastisch abgestützt. Das hat den Vorteil, dass die Führungselemente sowohl in Freigabestellung als auch in Fixierstellung durchgehend mittels Federkraft im Führungseingriff gehalten werden können, so dass die angestrebte Verdrehsicherung in jedem Betriebszustand gewährleistet ist. Bevorzugt ist die Auslenkung des Führungselements zwischen der Fixierstellung und der Freigabestellung größer als 1 mm, besonders bevorzugt größer als 4mm. Um eine kompakte Bauweise zu realisieren ist diese Auslenkung bevorzugt kleiner als 10mm. Ein weiterer Vorteil resultiert daraus, dass beim Fixieren die Führungselemente gegen die Federkraft gegeneinander bewegt werden, wobei das Federelement, welches die Federkraft ausübt, gespannt wird. Durch die beim Fixieren aufgebaute Federspannung wird beim Lösen der Spanneinrichtung das Fixierelement von der Trageinheit abgedrückt, wobei die Verbindungsmittel selbststätig voneinander getrennt werden. Beispielsweise werden Formschlusselement bildende Verzahnungen in Richtung der Spannachse voneinander abgehoben und außer Eingriff gebracht. Dadurch ist eine sichere und einfache Verstellung der Lenksäule gewährleistet. Durch die federnde Lagerung erhalten die Führungselemente somit eine vorteilhafte Doppelfunktion als Verdrehsicherung und zur Freigabeunterstützung.

Bevorzugt sind die Führungselemente, die Federelemente und die Verbindungsmittel als einstückiges integrales Bauteil ausgebildet zur Bildung des Fixierelements.

Bevorzugt ist das Federelement als Blattfeder ausgebildet. Alternativ oder zusätzlich kann dies auch andere geometrische Formen aufweisen, beispielsweise ein Spiralfederelement oder ein Tellerfederelement.

Eine vorteilhafte Ausführung sieht vor, dass das Fixierelement drei Führungselemente aufweist, von denen zwei mit Abstand zueinander auf der einen Seite des Langlochs angeordnet sind, und eines auf der anderen Seite des Langlochs angeordnet ist zwischen den beiden anderen Führungselementen. Durch die genau drei Führungselemente, die in einem Dreieck angeordnet und bevorzugt jeweils am Ende eines federnden Auslegers angebracht sind, wird eine stabile Dreipunktlagerung gebildet. Dadurch wird sichergestellt, dass auch in Freigabestellung keines der Führungselemente frei vorsteht, wodurch Vibrationen und unerwünschte Geräuschentwicklung weitgehend verhindert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Ansicht,
- Figur 2: eine Detailansicht einer Führungseinrichtung der Lenksäule gemäß Figur 1,
- Figur 3: eine Ansicht der Führungseinrichtung gemäß Figur 2 in Verstellrichtung,
- Figur 4: die Lenksäule gemäß Figur 1 in einer teilweise auseinander gezogenen Darstellung,
- Figur 5: ein erfindungsgemäßes Fixierelement in einer ersten Ausführung in einer Ansicht auf die von der Trageinheit abgewandten Außenseite,
- Figur 6: das Fixierelement gemäß Figur 5 in einer Ansicht auf die der Trageinheit zugewandten Innenseite,
- Figur 7: ein erfindungsgemäßes Fixierelement in einer zweiten Ausführung in einer Ansicht wie in Figur 5,
- Figur 8: ein erfindungsgemäßes Fixierelement in einer dritten Ausführung in einer Ansicht wie in Figur 5,
- Figur 9: ein erfindungsgemäßes Fixierelement in einer vierten Ausführung in einer Ansicht wie in Figur 5,
- Figur 10: ein erfindungsgemäßes Fixierelement in einer fünften Ausführung in einer Ansicht wie in Figur 5.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

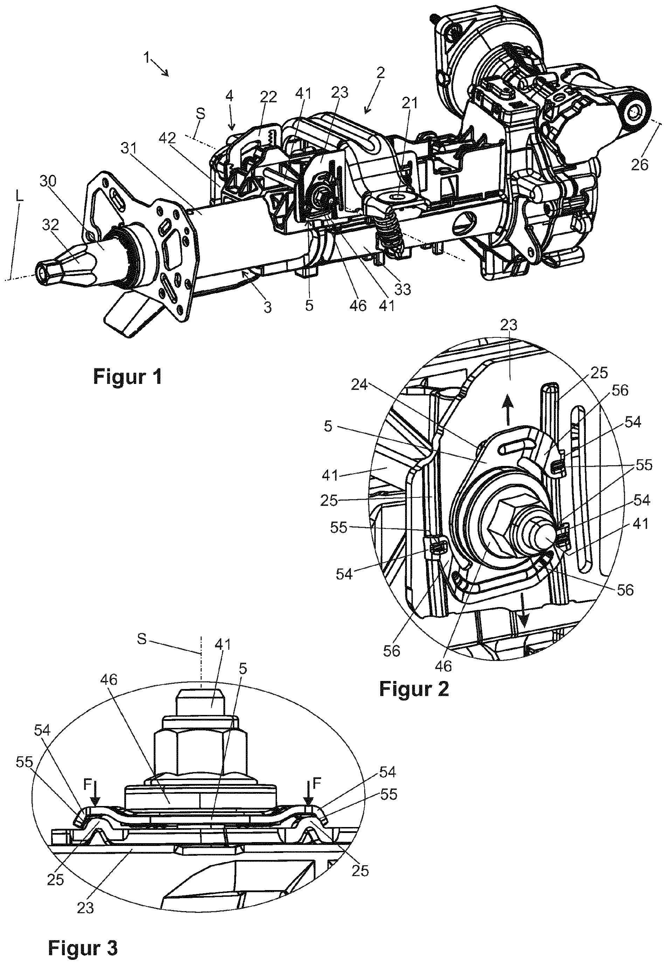

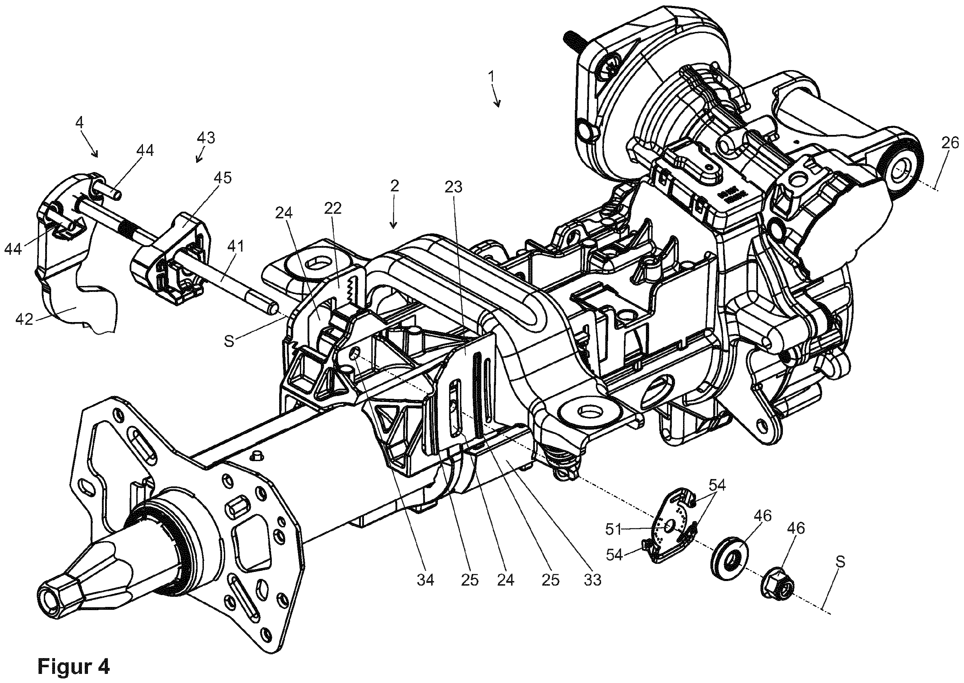

In Figur 1 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt. Figur 4 zeigt die Lenksäule 1 in einer teilweisen Explosionsdarstellung der Spanneinrichtung.

Die Lenksäule 1 kann an der Karosserie eines nicht dargestellten Kraftfahrzeugs mittels einer Trageinheit 2 befestigt werden, die auch als Konsole bezeichnet wird. Die Trageinheit 2 umfasst zur Verbindung mit der Karosserie Befestigungsmittel 21. Von der Trageinheit 2 erstrecken sich Seitenwangen 22, 23 nach unten, die bezüglich einer Längsachse L einander gegenüberliegen. In dem vorderen Bereich ist die Manteleinheit 34 um eine waagerecht quer zur Längsachse L liegende Schwenkachse 26 schwenkbar an der Karosserie gelagert, so dass die Stelleinheit 3 zur Höhenverstellung in Höhenrichtung H auf und ab verstellbar ist, wie mit dem Doppelpfeil angedeutet ist. Mit anderen Worten ist die Stelleinheit 3 gegenüber der Trageinheit 2 um die Schwenkachse 26 verschwenkbar.

Eine Stelleinheit 3 umfasst eine Lenkspindel 30, die um die Längsachse L drehbar in einem inneren Mantelrohr 31, kurz als Mantelrohr 31 bezeichnet, gelagert. An einem Befestigungsabschnitt 32 am hinteren Ende ist ein nicht dargestelltes Lenkrad auf der Lenkspindel 30 anbringbar ist. An einem hinteren Ende ist die Lenkspindel 30 mit einer Lenkwelle verbindbar, wobei diese zumindest ein Universalgelenk umfassen kann und mit einem nicht gezeigten Lenkgetriebe drehmomentenschlüssig verbindbar ist. Das Mantelrohr 31 ist in einer in Längsrichtung durchgehenden Aufnahme einer äußeren Manteleinheit 33, kurz Manteleinheit 33, gehaltert.

Eine Spanneinrichtung 4 weist einen Spannbolzen 41 auf, der sich auf einer Spannachse S quer zur Längsachse L erstreckt. Der Spannbolzen 41 ist durch Langlöcher 24 in den Seitenwangen 22, 23 hindurch geführt. In Lagern 34 ist der Spannbolzen 41 an der Manteleinheit um die Spannachse S drehbar gelagert, wobei diese Lager 34 durch Bohrungen gebildet sind.

An dem Spannbolzen 41 ist ein Betätigungshebel 42 drehfest angebracht. Ein Spanngetriebe 43 ist im gezeigten Beispiels als an sich bekanntes Kippstiftgetriebe ausgeführt mit am Betätigungshebel abgestützten Kippstiften 44 und einem damit zusammenwirkenden Druckstück 45, welches sich von außen gegen die eine Seitenwange 22 abstützt. Das andere, dem Betätigungshebel 42 angewandte Ende des Spannbolzens 41 stützt sich über ein Widerlager 46 von außen gegen die andere Seitenwange 23 ab. Zwischen dem Widerlager 46 und der Außenseite der Seitenwange 23 ist ein erfindungsgemäßes Fixierelement 5 angeordnet, welches noch näher erläutert wird. Das Widerlager ist gebildet durch ein Axiallager, umfassend zumindest einen Wälzkörper beispielsweise eine Kugel oder einen Zylinderstift, und eine Mutter, beispielsweise eine selbstsichernde Mutter mit Außensechskant.

Wird mittels des Betätigungshebels 42 der Spannbolzens 41 um die Spannachse S zur Einstellung der Fixierstellung in Feststell- oder Spannrichtung gedreht, erzeugt das Spanngetriebe 43 einen Klemmhub in Richtung der Spannachse S zwischen der Seitenwange 22 und dem Betätigungshebel 42. Dadurch zieht der Spannbolzen 41 das Widerlager 46 mit der durch das Spanngetriebe 43 erzeugten Klemmkraft von außen gegen die Seitenwange 23, und das Druckstück 45 stützt sich mit derselben Klemmkraft von außen gegen die Seitenwange 22 ab, so dass die Stelleinheit 3 zwischen den Seitenwangen 22 und 23 festgeklemmt, d.h. lösbar verspannt wird.

Wird die Spanneinrichtung 4 durch entgegengesetzte Drehung des Spannbolzens 41 in Freigabestellung gebracht, kann sich der Spannbolzen 41 von dem Druckstück 45 in Richtung der Spannachse S axial auf das Widerlager 46 hin bewegen, so dass die auf die von außen auf die Seitenwangen 22, 23 ausgeübte Klemmkraft aufgehoben und die Klemmung der Stelleinheit 3 gelöst wird. In dieser entspannten Freigabestellung kann die Stelleinheit 3 in Höhenrichtung H relativ zur Trageinheit 2 in Höhenrichtung H auf und ab verstellt werden. Dabei bewegt sich der Spannbolzen 41 jeweils in dem Langloch 24 in dessen Längserstreckung in Verstellrichtung nach oben oder unten entlang.

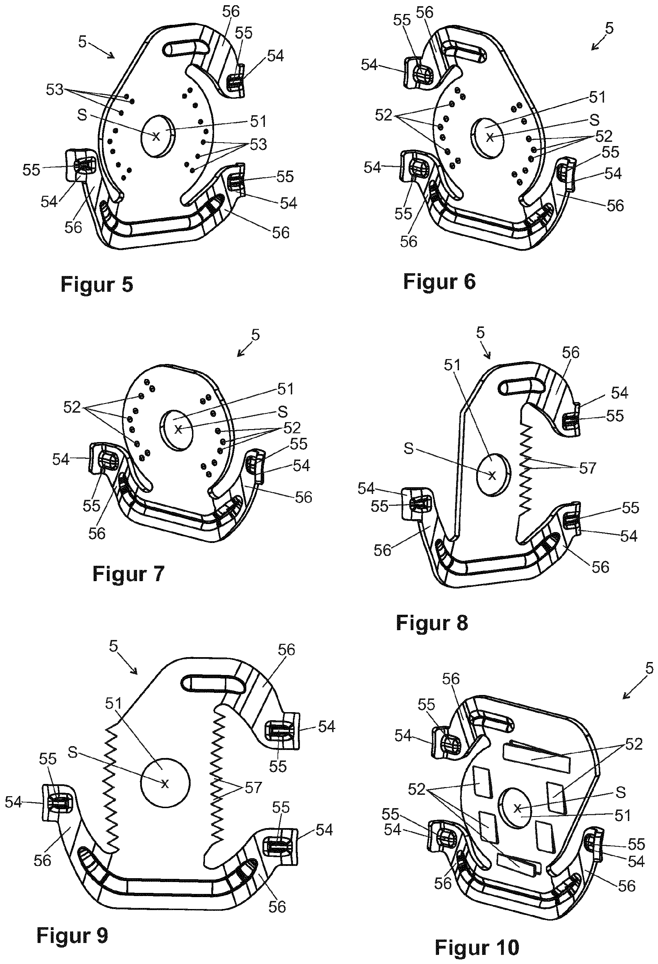

Zwischen dem Widerlager 46 und der Außenseite der Seitenwange 23 ist auf dem Spannbolzen 41 das Fixierelement 5 angebracht, wie in Figur 2 als Ausschnittvergrößerung von Figur 2 perspektivisch dargestellt, und in der ausschnittweisen Draufsicht von Figur 3 mit der Blickrichtung von oben senkrecht zur Längsachse L und senkrecht zur Spannachse S. Figur 5 zeigt das Fixierelement 5 freigestellt in der Perspektive von Figur 2, also auf die von der Trageinheit 3 abgewandte Außenseite. Figur 6 zeigt eine Ansicht auf die der Trageinheit 3 zugewandte Innenseite des Fixierelements 5.

Das Fixierelement 5 hat die Grundform einer flachen Scheibe, mit einer zentralen Öffnung 51, durch die in montiertem Zustand wie in Figur 2 und 3 der Spannbolzen 41 in Richtung der Spannachse S hindurchgeht.

Auf der Innenseite, die Außenseite der Seitenwange 23 der Trageinheit 2 zugewandt ist, sind Verbindungsmittel 52 angeordnet, welche in der Ausführung von Figur 6 als vorstehende Noppen ausgebildet sind. Diese Noppen werden durch Einformungen gebildet, die wie in Figur 5 erkennbar von außen in das aus Blech, bevorzugt aus Stahlblech oder Federstahlblech ausgebildete Fixierelement 5 plastisch eingeformt sind, bevorzugt durch Einpressen. Beim Fixieren wird die in Figur 6 sichtbare Stirnseite in Richtung der Spannachse S von außen gegen die Seitenwange 23 angepresst, wobei sich die noppenförmigen Verbindungsmittel 52 lokal in die Oberfläche einpressen, und eine in der Verstellrichtung, also in Richtung der Längserstreckung des Langlochs 24, wirksame kraft- und formschlüssige Verbindung erzeugt.

Das Fixierelement 5 weist insgesamt drei Führungselemente 54 auf, welche jeweils eine zur Trageinheit 2 hin eingeformte Nut 55 aufweisen, die sich in der Verstellrichtung erstreckt. Jedes der Führungselemente 54 ist jeweils am freien Endbereich eines von dem Fixierelement 5 abstehenden, streifenförmigen Auslegers 56 angeordnet. Dabei wird ein Ausleger 56 jeweils durch einen, biegeelastischen Arm aus Stahl- oder Federstahlblech gebildet, der bevorzugt einstückig mit dem Fixierelement 5 ausgebildet ist. Die Nut 55 ist durch eine Press- oder Biegeumformung ebenfalls einstückig jeweils in den Ausleger 56 eingeformt.

Durch die streifenförmige Gestaltung bildet ein Ausleger 56 jeweils eine biegeelastische Blattfeder oder Federzunge, die jeweils eine in Richtung der Spannachse S federnde Halterung eines Führungselements 54 bildet.

Parallel zu dem Langloch 24 verlaufend sind außen an der Seitenwange 23 zwei stegförmig vorstehende Schienen 25 angeordnet, welche zu den Nuten 55 korrespondierende Führungselemente bilden. Wie Figuren 2 und 3 entnehmbar sitzen die Führungselemente 54 mit den Nuten 55 auf den Schienen 25, und bilden auf der Schiene 25 gleitend verschiebbare Gleitstücke. Dabei sind in der Ansicht von Figur 2 und 5 auf der in der Ansicht links liegenden Schiene 25 ein Führungselement 54, und auf der in der Ansicht rechts liegenden Schiene 25 zwei Führungselemente 54 angeordnet, so dass sie auf den Ecken eines Dreiecks liegen.

In Freigabestellung der Spanneinrichtung 4 können die Führungselemente 54 auf den Schienen 25 entlanggleiten, wenn der Spannbolzen 41 bei der Höhenverstellung in dem Langloch 24 nach oben oder unten entlangbewegt wird, wie in Figur 2 mit den Pfeilen angedeutet. Dadurch ist das Fixierelement 5 in Richtung der Schienen 25 parallel zum Langloch 24 translatorisch zwangsgeführt, und kann sich bezüglich der Spannachse S nicht verdrehen, wenn der Spannbolzen 41 zum Fixieren oder Lösen gedreht wird. Dadurch, dass die Ausleger 56 die Führungselemente 54 mit einer Federkraft F federnd gegen die Schienen 25 andrücken, wie in Figur 3 gezeigt, ist in jedem Betriebszustand eine Verdrehsicherung gewährleistet. Dabei liegen die Nuten 55 nicht nur in der in Figur 3 dargestellten Fixierstellung formschlüssig auf den Schienen 25, sondern auch in der Freigabestellung, wenn die Verstellung erfolgen kann. Dabei wird das Fixierelement 5 in der Freigabestellung durch die Federkraft F von der Außenseite der Seitenwange 23 abgedrückt, so dass die Verbindung der Verbindungsmittel 52 mit der Seitenwange 23 gelöst wird, und der Spannbolzen 41 samt Fixierelement 5 zur Höhenverstellung der Stelleinheit 3 relativ zur Trageinheit 2 auf oder ab bewegt werden kann.

In der dargestellten Ausführung sind die drei Führungselemente 54 auf den Ecken eines Dreiecks angeordnet, wobei zwei Führungselemente 54 auf der in Figur 2 rechts des Langlochs 24 liegenden Längsrands auf der Schiene 25 gleitend angeordnet sind, und das dritte Führungselement 54 auf der Schiene 25, die sich bezüglich des Langlochs auf der gegenüber liegenden Seite befindet. Dadurch ergibt sich eine stabile Dreipunktlagerung des Fixierelements 5.

Figur 7 zeigt eine zweite Ausführungsform eines Fixierelements 5, welches im Prinzip gleich aufgebaut ist wie die Ausführung gemäß Figur 6, jedoch nur zwei Ausleger 56 aufweist.

Die in Figur 8 dargestellte dritte Ausführungsform eines Fixierelements 5 weist wie die Ausführung gemäß Figur 6 drei Ausleger 56 auf. Am Rand des Fixierelements 5 ist eine Verzahnung 57 ausgebildet, welche eine sich in Richtung des Langlochs 24 erstreckende Zahnreihe aufweist. Die Verzahnung 57 bildet ein Formschlusselement, welches beim Fixieren mit einem korrespondierenden, als Gegenverzahnung ausgebildeten Formschlusselement (nicht dargestellt) außen an der Seitenwange 23 zur Erzeugung einer in der Verstellrichtung wirksamen Formschlussverbindung ein Eingriff gebracht werden kann.

Die in Figur 9 dargestellte vierte Ausführung ist ähnlich gestaltet wie das Fixierelement 5 gemäß Figur 8. Zusätzlich ist dabei eine zweite Verzahnung 57 auf der bezüglich der Spannachse S gegenüberliegenden Seite des Langlochs 24 vorgesehen. Die beiden einander bezüglich des Langlochs 24 einander gegenüber liegenden Verzahnungen 57 greifen in Fixierstellung in korrespondierende Gegenverzahnungen (nicht dargestellt) auf der Außenseite der Seitenwange 23 formschlüssig ein. Die Gegenverzahnungen weisen im Wesentlichen parallel zur Langloch 24 und den Schienen 25 verlaufende Zahnreihen auf. Durch die erfindungsgemäß durch die Führungselemente 54 zusammen mit den Schienen 25 gebildete Führungseinrichtung behält das Fixierelement 5 beim Verstellen seine rotatorische Orientierung bezüglich der Spannachse S bei, so dass die Verzahnungen 57 jederzeit optimal relativ mit den Gegenverzahnungen fluchtend ausgerichtet sind und durch eine Bewegung in Richtung der Spannachse S in Eingriff bringbar sind. Die Verzahnung auf der einen Seite des Langlochs 24, hier in der Figur 9 die linke Verzahnung 57, weist Zähne mit einem Zahnspitzenwinkel auf, der größer ist als der Zahnspitzenwinkel der Zähne der Verzahnung auf der anderen Seite des Langlochs 24, in der Figur 9 die rechte Verzahnung 57. Dabei ist die Verzahnung 57 mit den Zähnen mit dem kleineren Zahnspitzenwinkel i näher an der Schwenkachse 26 n einem montierten Zustand der Lenksäule 1 als die Verzahnung 57 mit den Zähnen mit dem größeren Zahnspitzenwinkel. Der Zahnspitzenwinkel ist der Winkel der Zahnflanken eines Zahns.

In Fixierstellung befinden sich die Verzahnungen 57 im Formschlusseingriff und sichern das Fixierelement 5 mit dem Spannbolzen 41 und damit auch die Stelleinheit 3 gegen eine Bewegung in Höhenrichtung, wodurch ein Aufrichten der Lenksäule 1 im Crashfall wirksam unterdrückt wird. Beim Lösen der Spanneinrichtung 4 wird das Fixierelement 5 durch die von den elastischen Auslegern 56 ausgeübte Federkraft F nach außen von der Seitenwange 23 abgehoben, wodurch die Verzahnungen 57 aus dem Formschlusseingriff gebracht werden und eine Verstellung der Stelleinheit 3 in Höhenrichtung ermöglicht wird.

Figur 10 zeigt eine fünfte Ausführungsform, die ähnlich gestaltet ist wie das Fixierelement 5 gemäß Figur 6. Dabei weisen die Verbindungsmittel 52 schuppenartig vorstehende Laschen oder Zungen auf, die beim Fixieren ähnlich wie die Noppen in der ersten Ausführung eine kraft- und/oder Formschlüssige Verbindung erzeugen.

Das Fixierelement 5 gemäß den Figuren 5 bis 10 kann bevorzugt als einstückiges Blechformteil ausgebildet sein, vorzugsweise aus Stahl oder Federstahlblech, welches durch Umformen mittels Stanzen, Biegen und/oder Pressen rationell gefertigt sein kann.

Eine Längsverstellung in Richtung der Längsachse L kann dadurch realisiert sein, dass in Freigabestellung das innere Mantelrohr 31 in Richtung der Längsachse L innerhalb der äu-ßeren Manteleinheit 33 teleskopartig verschiebbar ist. In Fixierstellung ist das Mantelrohr 31 in der Manteleinheit 33 in Längsrichtung durch die dann gegeneinander verspannten Seitenwangen 22 und 23 fixiert. Durch die Verspannung ist sichergestellt, dass bei den im normalen Betrieb üblicherweise über das Lenkrad auf die Lenkspindel 30 einwirkenden Kräften die eingestellte Lenkradposition in Längs- und Höhenrichtung nicht verändert wird.

Weiters kann eine erfindungsgemäße Lenksäule 1 bevorzugt eine Energieabsorptionseinrichtung umfassen, wobei ein Energieabsorptionselement derart angeordnet ist, dass im Fall eines unfallbedingten Frontalaufpralls deformiert wird. Solche Energieabsorptionseinrichtungen sind dem Fachmann hinlänglich aus dem Stand der Technik bekannt.

### Bezugszeichenliste

- 1: Lenksäule
- 2: Trageinheit (Konsole)
- 21: Befestigungsmittel
- 22, 23: Seitenwangen
- 24: Langloch
- 25: Schienen
- 26: Schwenkachse
- 3: Stelleinheit
- 30: Lenkspindel
- 31: (inneres) Mantelrohr
- 32: Befestigungsabschnitt
- 33: (äußere) Manteleinheit
- 34: Lager
- 4: Spanneinrichtung
- 41: Spannbolzen
- 42: Betätigungshebel
- 43: Spanngetriebe
- 44: Kippstift
- 45: Druckstück
- 5: Fixierelement
- 51: Öffnung
- 52: Verbindungsmittel
- 53: Einformungen
- 54: Führungselemente
- 55: Nut
- 56: Ausleger
- 57: Verzahnung

- L: Längsachse
- S: Spannachse
- F: Federkraft

## Patentansprüche

1. Lenksäule (1) für ein Kraftfahrzeug, umfassend
eine mit der Karosserie eines Kraftfahrzeugs verbindbare Trageinheit (2),
eine an der Trageinheit (2) lösbar festspannbare Stelleinheit (3), in der eine Lenkspindel (30) um ihre Längsachse (L) drehbar gelagert ist, und
eine Spanneinrichtung (4), die in eine Fixierstellung bringbar ist, in der sie die Stelleinheit (3) relativ zur Trageinheit (2) festlegt, und in eine Freigabestellung, in der sie eine Verstellung der Stelleinheit (3) relativ zur Trageinheit (2) zumindest in einer Höhenrichtung (H) quer zur Längsachse (L) freigibt,
und die einen längs einer Spannachse (S) angeordneten Spannbolzen (41) aufweist, der quer zur Längsachse (L) durch ein in einer Verstellrichtung langgestrecktes Langloch (24) in der Trageinheit (2) hindurchgeführt ist, in dem er in Freigabestellung in Verstellrichtung bewegbar ist, und der mit einem Spanngetriebe zusammenwirkt, wobei auf dem Spannbolzen (24) ein Fixierelement (5) angeordnet ist, welches von der Spanneinrichtung (4) in Richtung der Spannachse (S) gegen die Trageinheit (2) verspannbar ist, und eine Führungseinrichtung ausgebildet ist mit korrespondierenden Führungselementen (25, 54) an dem Fixierelement (5) und an der Trageinheit (2), in denen das Fixierelement (5) relativ zur Trageinheit (2) translatorisch geführt ist, wobei die Führungselemente (25, 54) mit Abstand zum Langloch (24) angeordnet sind, und wobei das Fixierelement (5) mindestens einen seitlich abstehenden Ausleger (56) aufweist, an dem mindestens ein Führungselement (54) angebracht ist,
**dadurch gekennzeichnet,**
**dass** mindestens ein Ausleger (56) ein Federelement aufweist.

2. Lenksäule nach Anspruch 1, **dadurch gekennzeichnet, dass** Führungselemente (25, 54) beiderseits des Langlochs (24) angeordnet sind.

3. Lenksäule nach einem der vorangehenden Ansprüche, **dadurch gekennzeichnet, dass** ein an dem Fixierelement (5) ausgebildetes Verbindungsmittel (52, 57) in Fixierstellung mit der Trageinheit (2) verbindbar ist zur Bildung einer in Verstellrichtung wirksamen Verbindung.

4. Lenksäule nach einem der vorangehenden Ansprüche, **dadurch gekennzeichnet, dass** korrespondierende Führungselemente (25, 54) auf den in Richtung der Spannachse (S) einander gegenüberliegenden Stirnseiten von Fixierelement (5) und Tragelement (2) angeordnet sind.

5. Lenksäule nach einem der vorangehenden Ansprüche, **dadurch gekennzeichnet, dass** die Führungselemente (25, 54) mindestens eine Schiene (25) und ein daran entlang bewegbares Gleitstück (54) umfassen.

6. Lenksäule nach einem der vorangehenden Ansprüche, **dadurch gekennzeichnet, dass** ein Führungselement (25, 54) einstückig mit dem Fixierelement (5) und/oder dem Tragelement (2) ausgebildet ist.

7. Lenksäule nach einem der vorangehenden Ansprüche, **dadurch gekennzeichnet, dass** ein Führungselement (25, 54) an dem Fixierelement (5) und/oder der Trageinheit (2) federnd gelagert ist.

8. Lenksäule nach einem der vorangehenden Ansprüche, **dadurch gekennzeichnet, dass** das Fixierelement (5) und/oder das Tragelement (2) zumindest teilweise ein Blechformteil aufweisen.

9. Lenksäule nach einem der vorangehenden Ansprüche, **dadurch gekennzeichnet, dass** das Fixierelement (5) drei Führungselemente (54) aufweist, von denen zwei mit Abstand zueinander auf der einen Seite des Langlochs (24) angeordnet sind, und eines auf der anderen Seite des Langlochs (24) angeordnet ist zwischen den beiden anderen Führungselementen (54).

## Claims

1. Steering column (1) for a motor vehicle, comprising
a support unit (2)
which can be connected to the body of a motor vehicle,
an adjusting unit (3) which can be releasably clamped
to the support unit (2) and in which a steering spindle (30) is mounted so as to be rotatable about its longitudinal axis (L), and
a clamping device (4), which can be brought into a fixing position, in which it fixes the adjusting unit (3) relative to the support unit (2), and into a release position, in which it releases an adjustment of the adjusting unit (3) relative to the support unit (2) at least in a height direction (H) transverse to the longitudinal axis (L),
and which has a clamping bolt (41) which is arranged along a clamping axis (S) and which is guided transversely to the longitudinal axis (L) through an elongate slot (24) in the support unit (2) in an adjustment direction, in which slot it can be moved in the adjustment direction in the release position, and which co-operates with a clamping gear, wherein a fixing element (5) is arranged on the clamping bolt (24), which fixing element can be braced against the support unit (2) by the clamping device (4) in the direction of the clamping axis (S), and a guide device is formed with corresponding guide elements (25, 54) on the fixing element (5) and on the support unit (2), in which the fixing element (5) is guided in translation relative to the support unit (2), wherein the guide elements (25, 54) are arranged at a distance from the slotted hole (24), and wherein the fixing element (5) has at least one laterally projecting extension arm (56), to which at least one guide element (54) is attached,
**characterised in**
**in that** at least one cantilever (56) has a spring element.

2. Steering column according to claim 1, **characterised in that** guide elements (25, 54) are arranged on both sides of the slotted hole (24).

3. Steering column according to one of the preceding claims, **characterised in that** a connecting means (52, 57) formed on the fixing element (5) can be connected to the support unit (2) in the fixing position to form a connection effective in the direction of adjustment.

4. Steering column according to one of the preceding claims, **characterised in that** corresponding guide elements (25, 54) are arranged on the end faces of the fixing element (5) and supporting element (2) opposite one another in the direction of the clamping axis (S).

5. Steering column according to one of the preceding claims, **characterised in that** the guide elements (25, 54) comprise at least one rail (25) and a sliding piece (54) movable therealong.

6. Steering column according to one of the preceding claims, **characterised in that** a guide element (25, 54) is formed integrally with the fixing element (5) and/or the support element (2).

7. Steering column according to one of the preceding claims, **characterised in that** a guide element (25, 54) is resiliently mounted on the fixing element (5) and/or the support unit (2).

8. Steering column according to one of the preceding claims, **characterised in that** the fixing element (5) and/or the support element (2) at least partially comprise a sheet metal moulding.

9. Steering column according to one of the preceding claims, **characterised in that** the fixing element (5) has three guide elements (54), two of which are arranged at a distance from one another on one side of the slotted hole (24), and one of which is arranged on the other side of the slotted hole (24) between the two other guide elements (54).

## Revendications

1. Colonne de direction (1) pour un véhicule automobile, comprenant
une unité de support (2)
pouvant être reliée à la carrosserie d'un véhicule automobile,
une unité de réglage (3) pouvant être fixée de manière amovible
à l'unité de support (2), dans laquelle un arbre de direction (30) est monté de manière à pouvoir tourner autour de son axe longitudinal (L), et
un dispositif de serrage (4), qui peut être amené dans une position de fixation, dans laquelle il immobilise l'unité de réglage (3) par rapport à l'unité de support (2), et dans une position de libération, dans laquelle il libère un déplacement de l'unité de réglage (3) par rapport à l'unité de support (2) au moins dans une direction de hauteur (H) transversale à l'axe longitudinal (L),
et qui présente un boulon de serrage (41) disposé le long d'un axe de serrage (S), qui est guidé transversalement à l'axe longitudinal (L) à travers un trou oblong (24) allongé dans une direction de réglage dans l'unité de support (2), dans lequel il est mobile dans la direction de réglage en position de libération, et qui coopère avec un mécanisme de serrage, un élément de fixation (5) étant disposé sur le boulon de serrage (24), lequel peut être serré contre l'unité de support (2) par le dispositif de serrage (4) en direction de l'axe de serrage (S), et un dispositif de guidage est réalisé avec des éléments de guidage correspondants (25, 54) sur l'élément de fixation (5) et sur l'unité de support (2), dans lesquels l'élément de fixation (5) est guidé en translation par rapport à l'unité de support (2), les éléments de guidage (25, 54) étant disposés à distance du trou oblong (24), et l'élément de fixation (5) présentant au moins un bras (56) faisant saillie latéralement, sur lequel est monté au moins un élément de guidage (54),
**caractérisé en ce que**
qu'au moins un bras (56) présente un élément de ressort.

2. Colonne de direction selon la revendication 1, **caractérisée en ce que** des éléments de guidage (25, 54) sont disposés de part et d'autre du trou oblong (24).

3. Colonne de direction selon l'une des revendications précédentes, **caractérisée en ce qu'**un moyen de liaison (52, 57) formé sur l'élément de fixation (5) peut être relié à l'unité de support (2) en position de fixation pour former une liaison efficace dans la direction de réglage.

4. Colonne de direction selon l'une des revendications précédentes, **caractérisée en ce que** des éléments de guidage (25, 54) correspondants sont disposés sur les faces frontales de l'élément de fixation (5) et de l'élément de support (2) opposées l'une à l'autre dans la direction de l'axe de serrage (S).

5. Colonne de direction selon l'une des revendications précédentes, **caractérisée en ce que** les éléments de guidage (25, 54) comprennent au moins un rail (25) et une pièce coulissante (54) mobile le long de celui-ci.

6. Colonne de direction selon l'une des revendications précédentes, **caractérisée en ce qu'**un élément de guidage (25, 54) est formé d'une seule pièce avec l'élément de fixation (5) et/ou l'élément de support (2).

7. Colonne de direction selon l'une des revendications précédentes, **caractérisée en ce qu'**un élément de guidage (25, 54) est monté élastiquement sur l'élément de fixation (5) et/ou sur l'unité de support (2).

8. Colonne de direction selon l'une des revendications précédentes, **caractérisée en ce que** l'élément de fixation (5) et/ou l'élément de support (2) présentent au moins en partie une pièce moulée en tôle.

9. Colonne de direction selon l'une des revendications précédentes, **caractérisée en ce que** l'élément de fixation (5) présente trois éléments de guidage (54), dont deux sont disposés à distance l'un de l'autre d'un côté du trou oblong (24), et un est disposé de l'autre côté du trou oblong (24) entre les deux autres éléments de guidage (54).
